# EUROPÄISCHE PATENTSCHRIFT

(11) **EP 1 742 011 B1**
(45) Veröffentlichungstag und Bekanntmachung des Hinweises auf die Patenterteilung: **03.11.2010**
(21) Anmeldenummer: 06013334.5
(22) Anmeldetag: 28.06.2006
(51) Int. Cl.: G01B 5/012, H02K 57/00

(54) **Tastkopf**
Sensor head
Tête de palpage

(30) Priorität: 08.07.2005 DE 102005031994; 26.05.2006 DE 102006024491; 26.05.2006 DE 102006024492
(43) Veröffentlichungstag der Anmeldung: 10.01.2007
(73) Patentinhaber: Dr. Johannes Heidenhain GmbH, 83292 Traunreut (DE)
(72) Erfinder: Schopf, Reinhold, 83308 Trostberg (DE); Gröll, Klaus, 83329 Waging am See (DE)

(56) Entgegenhaltungen:
- EP-B1- 0 217 808
- FR-A1- 2 715 222
- JP-A- 3 223 602
- US-A- 5 564 872
- US-A1- 2003 102 287

## Beschreibung

Die Erfindung betrifft einen Tastkopf gemäß dem Anspruch 1, welcher insbesondere für einen energieautarken, batterielosen Betrieb geeignet ist.

Tastsysteme werden beispielsweise zur Positionsbestimmung von Werkstücken verwendet, die in Material bearbeitenden Maschinen, z. B. Fräsmaschinen, eingespannt sind. Diese Tastsysteme weisen häufig eine stationäre Sender-Empfängereinheit auf, welche an einem ortfesten Element der Material bearbeitenden Maschine befestigt ist und ein relativ dazu bewegliches bzw. mobiles Teil, welches häufig als Tastkopf bezeichnet wird. Der Tastkopf ist meist an einem beweglichen Element der Material bearbeitenden Maschine, etwa an einer Frässpindel angebracht. Dabei umfasst der Tastkopf einen aus einer Ruheposition auslenkbaren Taststift, bzw. ein auslenkbares Tastelement, welches bei einer Auslenkung aus seiner Ruheposition heraus ein Schaltsignal erzeugt. Unter der Ruheposition des Tastelementes wird eine Position des Tastelementes verstanden, in der es keinen Kontakt mit einem Werkstück hat. Bei Kontakt des Tastelementes mit dem Werkstück wird das Tastelement aus seiner Ruheposition heraus ausgelenkt.

Bei so genannten kabellosen Tastsystemen wird das entsprechende Schaltsignal vom Tastkopf als elektromagnetisches Signal, insbesondere als Infrarotsignal, an die stationäre Sender-Empfängereinheit übertragen. In dieser werden die Ausgangssignale des Tastsystems ausgewertet, um das Auftreten von Schaltsignalen (also eine Auslenkung des Tastelementes) festzustellen. Eine Kabelverbindung zwischen Tastkopf und der stationären Sender-Empfängereinheit besteht also häufig nicht.

Ein derartiger Tastkopf weist häufig zu dessen Energieversorgung eine Gleichstromquelle in Form von einer oder mehrerer Batterien auf. Es besteht der permanente Wunsch die Verfügbarkeit von derartigen Tastsystemen zu erhöhen, weshalb versucht wird die Standzeit der Gleichstromquellen zu maximieren.

In der EP 1 179 173 B1 wird beispielsweise ein batteriebetriebener Tastkopf angegeben, bei dem durch verschiedene Maßnahmen die Lebensdauer der Batterien verlängert werden soll, was letztlich die Verfügbarkeit des entsprechenden Tastsystems wegen selteneren Stillstandszeiten infolge verbrauchter Batterien verbessert.

Ein Tastkopf mit eingebauten Generator ist aus der Druckschrift JP 03 223 602 A bekannt.

In den Druckschriften EP 0 217 808 B1 und US 5 564 872 wird vorgeschlagen einen Tastkopf mit einer Turbine und einem Generator auszurüsten, um dann durch beaufschlagen von Druckluft elektrische Energie für den Betrieb des Tastkopfes zu erzeugen. Als Generatoren werden dort übliche Anordnungen verwendet. Derartige Vorrichtungen bedürfen eines vergleichsweise großen Bauraumes.

Der Erfindung liegt unter anderem die Aufgabe zugrunde, einen Tastkopf zu schaffen, bei welchem die Verfügbarkeit eines Tastsystems erhöht wird, welcher mit minimalem Wartungsaufwand betrieben werden kann und mit überaus geringen Außenabmessungen herstellbar ist.

Diese Aufgabe wird erfindungsgemäß durch einen Tastkopf mit den Merkmalen des Anspruches 1 gelöst.

Demnach umfasst der Tastkopf neben einem Taststift eine elektrische Schaltung, der unter anderem eine Sensoreinheit, eine CPU (Central Processing Unit) und eine Sendestufe zugeordnet sind. Darüber hinaus weist der Tastkopf einen Erzeuger von elektrischer Energie zur Energieversorgung der genannten Elemente der Schaltung auf. Bei einer Auslenkung des Taststifts ist von der Sensoreinheit ein elektrisches Signal auslösbar, welches in der Sendestufe in ein aussendbares elektromagnetisches Signal umwandelbar ist. Dieses Signal ist dann von einer stationären Sende- Empfängereinheit empfangbar. Der Erzeuger von elektrischer Energie ist dabei mit Hilfe eines mit Druck beaufschlagten Fluids betreibbar und umfasst eine Turbine mit einem um eine Achse drehbaren Laufrad. Am Laufrad der Turbine sind Magnete befestigt, die stationären elektrisch leitfähigen Windungen mit axialem Abstand gegenüberliegen. Demnach befindet sich zwischen den Magneten und den Windungen ein Luftspalt der eine, bezogen auf die Achse des Laufrads, axiale Ausdehnung aufweist. Der Luftspalt zwischen den Magneten und dem Laufrad befindet sich also mit Vorteil an einer Stirnseite des Laufrads. Durch diese Anordnung ist eine äußerst kompakte Bauweise des Tastkopfes möglich. Nachdem die elektrisch leitfähigen Windungen stationär, also unbewegt, sind, wird überdies eine sehr wartungsarme bzw. gänzlich wartungsfreie Konstruktion erreicht.

Unter Fluid ist hier beispielsweise ein Gas zu verstehen, insbesondere Luft, bzw. Druckluft. Alternativ dazu kann als Fluid aber auch eine Flüssigkeit, etwa eine Kühlflüssigkeit, wie sie beispielsweise in Werkzeugmaschinen verwendet wird, benutzt werden.

Mit Vorteil kann die Turbine so ausgestaltet sein, dass das Fluid parallel zur Achse des Laufrads ausgestaltet ist, oder alternativ orthogonal (in tangentialer Richtung) dazu strömt. In vorteilhafter Ausgestaltung der Erfindung weist die Turbine eine diagonale Durchströmrichtung auf. Das heißt, dass das Fluid eine Strömungsrichtung erfährt, die eine tangentiale und axiale Richtungskomponente hat, bezogen auf die Drehachse des Laufrads.

Das Laufrad kann mit einem Wälzlager im Tastkopf gelagert sein oder durch ein Gleitlager, wobei das Laufrad als Kunststoffteil oder als Aluminiumteil ausgestaltet sein kann, welches einen geringen Reibungskoeffizienten aufweist, so dass mit Vorteil bei der Bauweise aus Kunststoff ein Gleitlager (als Bohrung im Drehpunkt des Laufrads) verwendet werden kann. Weiterhin kann die Lagerung durch das Fluid selbst geschmiert werden. Insbesondere bei Verwendung von Gas, z. B. Druckluft, kann ein überaus reibungsarmes Luftlager zur Lagerung des Laufrads im Tastkopf eingesetzt werden.

Gemäß einer vorteilhaften Bauweise sind die Magnete, die beispielsweise als Permanentmagnete oder Elektromagnete ausgestaltet sein können, in das Laufrad integriert angeordnet. Insbesondere können die Magnete so angeordnet sein, dass diese nicht aus der Außenkontur des Laufrads hervorragen.

Mit Vorteil ist zumindest einer der Magnete so angeordnet, dass die Verbindungslinie der beiden Pole eine Richtungskomponente parallel zur Drehachse des Laufrads aufweist. Mit anderen Worten treten die Feldlinien aus den beiden Polen eines im Laufrad angeordneten Magneten mit einer Richtungskomponente parallel zur Drehachse des Laufrads aus dem Magnet aus.

Die stationären elektrisch leitfähigen Windungen, können etwa in Form einer Drahtwicklung ausgebildet sein.

In weiterer vorteilhafter Ausgestaltung der Erfindung ist der Tastkopf so konstruiert, dass das aus dem Erzeuger von elektrischer Energie ausströmende Fluid, beispielsweise Luft, zur Reinigung einer Messstelle verwendbar ist. Zu diesem Zweck sind dann im Tastkopf entsprechende Strömungskanäle vorgesehen, welche das Fluid zur Messstelle leiten, ohne dass ein unzulässig hoher Druckverlust auftritt. Dadurch, dass das ausströmende Fluid, beispielsweise die Luft, nicht direkt in die Umgebung geführt wird, sondern durch die Strömungskanäle wird zudem mit Vorteil erreicht, dass der Betrieb des Erzeugers von elektrischer Energie sehr leise ist. Die Strömungskanäle wirken dann nämlich schalldämpfend.

Mit Vorteil weist der Tastkopf einen Energiespeicher insbesondere zur Speicherung der erzeugten elektrischen Energie auf. Ein derartiger Energiespeicher kann beispielsweise ein wiederaufladbarer Akkumulator oder ein Pufferkondensator sein. Als Pufferkondensatoren können hier in vorteilhafter Weise Doppelschicht-Kondensatoren, auch elektrochemische Doppelschicht Kondensatoren (electrochemical double layer capacity (EDLC)) genannt, wie sie unter den Markennamen Goldcaps, Supercaps oder Ultracaps vertrieben werden.

Alternativ dazu kann aber die erzeugte Energie auch durch mechanische Mittel gespeichert werden, etwa durch eine Feder oder in Form von Rotationsenergie des Laufrads der Strömungsmaschine, welches dann gleichsam als Schwungrad arbeitet. Diese gespeicherte mechanische Energie kann später in elektrische Energie umgewandelt werden.

Die Erfindung umfasst aber auch einen Tastkopf ohne Energiespeicher, bei dem dann während des Messbetriebs der Erzeuger von elektrischer Energie in Betrieb ist.

In vorteilhafter Ausgestaltung der Erfindung umfasst der Tastkopf ferner einen Spannungswandler an dessen Ausgang eine Ausgangsspannung erzeugbar ist, die größer ist als die am Spannungswandler anliegende Eingangsspannung, wobei die Ausgangsspannung des Spannungswandlers zur Energieversorgung der Sendestufe dient.

In weiterer Ausgestaltung der Erfindung ist der Tastkopf so konfiguriert, dass eine am Spannungswandler anliegende Eingangsspannung der Ausgangsspannung des Erzeugers von elektrischer Energie oder der Ausgangsspannung des Energiespeichers zur Speicherung der erzeugten elektrischen Energie entspricht.

Häufig ist der Tastkopf auch bei abgeschaltetem Erzeuger von elektrischer Energie verwendbar. In diesem Fall ist es dann vorteilhaft, wenn die Ausgangsspannung am Energiespeicher durch den Spannungswandler transformierbar ist, so dass die verfügbare Einsatzzeit verlängert wird. Dabei sind die Außenmaße eines derartigen Tastkopfes nicht größer als die eines mit Batterien betriebenen Tastkopfes.

Mit Vorteil ist der Tastkopf derart konfiguriert, dass während des Betriebs des Erzeugers von elektrischer Energie der erzeugte Strom sowohl dem Energiespeicher als auch den Verbrauchern zuführbar ist, also der Sensoreinheit oder der CPU oder der Sendestufe. Auf diese Weise kann der Tastkopf ohne jegliche Zeitverzögerung sofort nachdem das Laufrad mit dem Fluid beaufschlagt ist seinen Betrieb aufnehmen. Die Aufladezeit des Energiespeichers spielt dann keine Rolle, da dieser parallel zu Versorgung der der Sensoreinheit, der CPU oder der Sendestufe aufgeladen wird. Insbesondere kann in diesem Zusammenhang im Tastkopf eine Elektronik vorgesehen sein, die automatisch bei nicht vollständig aufgeladenem Energiespeicher einen By-Pass zur Sensoreinheit, der CPU, oder der Sendestufe für einen Teil des erzeugten Stroms öffnet. Der dann noch überschüssig erzeugte Strom wird zum Laden des Energiespeichers verwendet.

Herkömmliche Tastköpfe verfügen häufig über eine Empfangsstufe, welche elektromagnetische Signale von einer ortsfesten Sender-Empfängereinheit empfangen kann und dann entsprechende Reaktionen im Tastkopf hervorruft. Häufig ist die Reaktion auf den empfangenen Befehl lediglich die Funktionalität des Aktivierens bzw. Deaktivierens des Tastkopfes beschränkt. In einer bevorzugten Ausgestaltung der Erfindung wird die Aktivierung (Einschalten) durch Aufschalten des mit Druck beaufschlagten Fluids, insbesondere durch Aufschalten von Druckluft, auf den Tastkopf erreicht. Durch Ausschalten der Druckluft wird dann der Taster wieder deaktiviert, wobei bei Verwendung eines Energiespeichers im Tastkopf je nach installierter Speicherkapazität ein entsprechender Zeitraum bis zur endgültigen Deaktivierung vergehen kann. Durch den erfindungsgemäßen Tastkopf kann nun in vorteilhafter Ausgestaltung auf eine Empfangsstufe im Tastkopf verzichtet werden.

Durch die erfindungsgemäße Lösung kann also die Verfügbarkeit eines Tastsystems erhöht werden, bzw. es können Stillstands- oder Rüstzeiten reduziert werden. Denn der Tastkopf kann so ausgestaltet werden, dass dieser völlig energieautark arbeitet, so dass ein Wechseln von Batterien zu keinem Zeitpunkt notwendig ist.

Vorteilhafte Ausbildungen der Erfindung entnimmt man den abhängigen Ansprüchen.

Weitere Einzelheiten und Vorteile des erfindungsgemäßen Tastkopfs ergeben sich aus der nachfolgenden Beschreibung von Ausführungsbeispielen anhand der beiliegenden Figuren.

Es zeigen die
- Figur 1: eine schematische Darstellung des Tastsystems,
- Figur 2: eine perspektivische Ansicht eines erfindungsgemäßen Tastkopfes,
- Figur 3: eine perspektivische Ansicht eines erfindungsgemäßen Tastkopfes gemäß einer Konstruktionsvariante,
- Figur 4: eine Schnittdarstellung des Tastkopfes gemäß der Konstruktionsvariante,
- Figur 5: ein vergrößertes Detail der Schnittdarstellung des Tastkopfes gemäß der Konstruktionsvariante,
- Figur 6a: eine Draufsicht auf das Laufrad gemäß der Konstruktionsvariante,
- Figur 6b: eine Schnittdarstellung durch ein Laufrad gemäß der Konstruktionsvariante,
- Figur 7: einen schematischer Schaltungsplan einer elektrischen Schaltung des Tastkopfes,
- Figur 8: einen schematischer Schaltungsplan einer elektrischen Schaltung des Tastkopfes gemäß einer zweiten Variante,
- Figur 9: einen schematischer Schaltungsplan einer elektrischen Schaltung des Tastkopfes gemäß einer dritten Variante,
- Figur 10: einen schematischer Schaltungsplan einer elektrischen Schaltung des Tastkopfes gemäß einer vierten Variante.

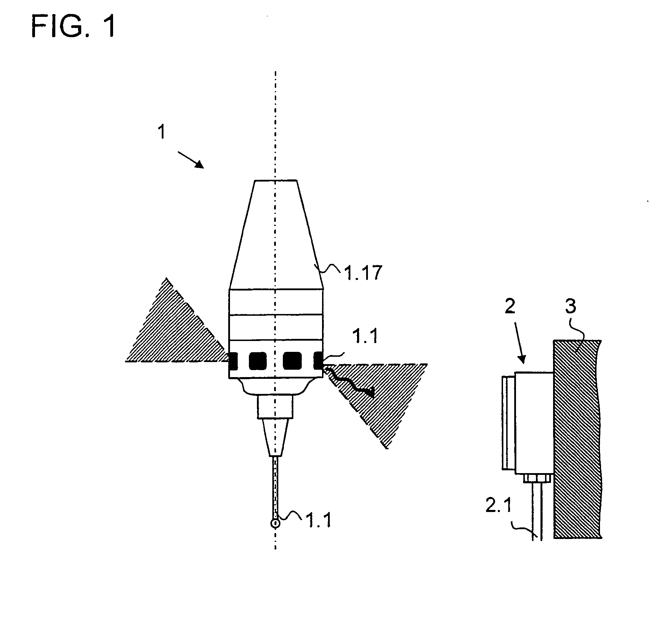

In der Figur 1 ist ein Tastkopf 1 gezeigt, der mittels eines Spannkonus 1.17 in eine Werkzeugmaschine eingespannt werden kann. Für die Messfunktion ist am Tastkopf 1 ein zylindrischer Taststift 1.1 vorgesehen, welcher an einem Ende eine Antastkugel aufweist.

Ferner umfasst das Tastsystem eine Empfängereinheit 2, welche an einem unbeweglichen Bauteil 3 der Werkzeugmaschine fixiert ist, so dass also der Tastkopf 1 gegenüber der Empfängereinheit 2 mobil, also relativ zu dieser beweglich ist.

Im gezeigten Ausführungsbeispiel sind über den Umfang des Tastkopfes 1 verteilt sechs Empfangselemente 1.2 vorgesehen, die jeweils um 60° entlang einer Umfangslinie am Tastkopf 1 versetzt befestigt sind. Mit Hilfe der Empfangselemente 1.2 können elektromagnetische Signale, hier Infrarot-Signale, ausgesendet werden, welche von der Empfängereinheit 2 empfangen werden können.

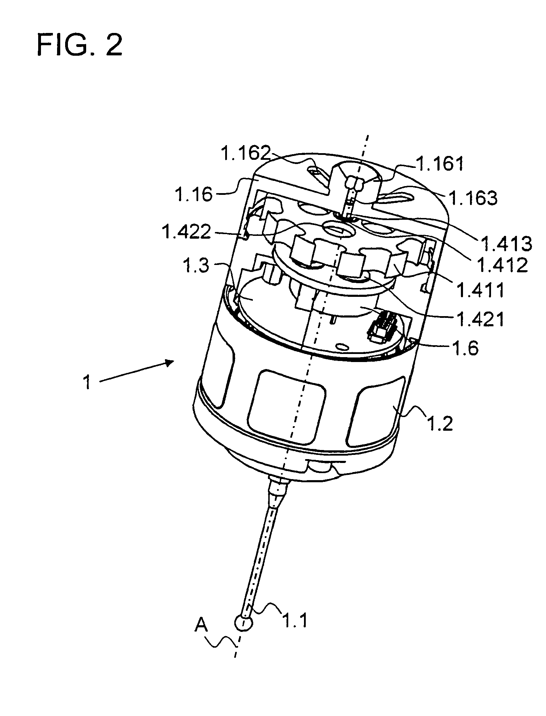

In der Figur 2 ist eine perspektivische Ansicht des Tastkopfs 1 im Teilschnitt ohne Spannkonus 1.17 gezeigt. Der Tastkopf 1 umfasst eine Kappe 1.16, die ein Befestigungsgewinde 1.161 aufweist, an das der Spannkonus 1.17 geschraubt werden kann. Ferner sind in der Kappe 1.16 vier Druckluftzuführungen 1.162 vorgesehen, die als schräge Bohrungen durch die Wandung der Kappe 1.16 ausgeführt sind. Des Weiteren weist die Kappe 1.16 eine zentrale Bohrung 1.163 auf.

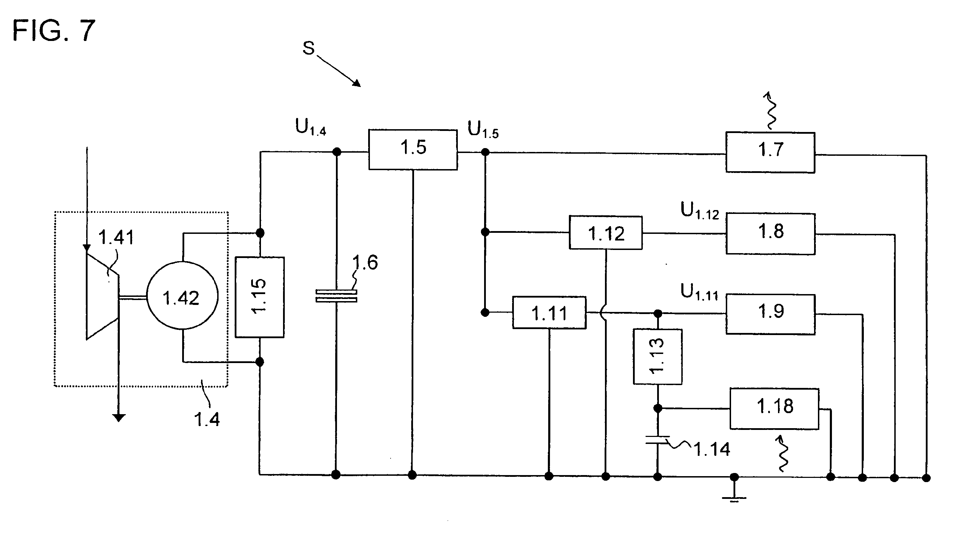

Innerhalb der Kappe 1.16 ist - wie in den Figuren 7 bis 10 schematisch dargestellt - ein Erzeuger 1.4 von elektrischer Energie in Form einer Turbine 1.41 in Kombination mit einem Generator 1.42 untergebracht ist. Die Turbine 1.41 umfasst gemäß der Figur 2 ein Laufrad 1.411, wobei das Laufrad um eine Achse A drehbar ist, und insbesondere mit einem Wälzlager 1.412 gegenüber einem feststehenden Zapfen 1.413 drehbar gelagert ist. Der Zapfen 1.413 ruht seinerseits in der zentralen Bohrung 1.163 der Kappe 1.16. Der Generator 1.42 besteht aus stationären elektrisch leitfähigen Windungen, hier in Form von Wicklungen 1.421 aus Draht, insbesondere Kupferdraht, und vier Magneten 1.422, welche im Laufrad 1.411 integriert sind. Die Magnete 1.422 sind in allen Ausführungsbeispielen als Permanentmagnete ausgestaltet. In den Figuren 7 bis 10 ist für den Erzeuger 1.4 von elektrischer Energie die übliche symbolische Darstellung hierfür gewählt worden, wenngleich im gezeigten Ausführungsbeispiel keine Welle zwischen Turbine 1.41 und Generator 1.42 dinghaft vorliegt. Dementsprechend sind am Laufrad 1.411 der Turbine 1.41 Magnete 1.42 befestigt, die stationären elektrisch leitfähigen Windungen 1.421 mit axialem Abstand , bezogen auf die Achse A des Laufrads 1.411, gegenüberliegen.

Unterhalb der Wicklungen 1.421 befindet sich ein Pufferkondensator 1.6, der im gezeigten Ausführungsbeispiel als Doppelschicht-Kondensator ausgestaltet ist und unter den Markennamen Goldcap bekannt ist. Ein derartiger Pufferkondensator 1.6 kann vergleichsweise viel elektrische Energie speichern, bei relativ geringer Spannung.

Weiter unten in der Figur 2 ist eine Leiterplatte 1.3 zu sehen, auf der verschiedene elektronische Bausteine einer Schaltung S montiert sind.

Üblicherweise ist der Tastkopf 1 mit seinem Spannkonus 1.17 in eine Werkzeugmaschine eingespannt, die ihrerseits mit Druckluft versorgt wird. Unmittelbar vor dem eigentlichen Messvorgang, wenn der Tastkopf 1 bereits in die Nähe der Messstelle verfahren wurde, wird die Messstelle durch Druckluft frei geblasen, um zu verhindern, dass herumliegende Späne oder dergleichen die Messung stören. Die Druckluft, als ein mit Druck beaufschlagtes Fluid, wird durch den Spannkonus 1.17 in die Druckluftzuführungen 1.162 geleitet. In den Druckluftzuführungen 1.162 wird die Druckluft so umgeleitet, dass diese tangential und mit einer axialen Richtungskomponente schräg auf den Außenumfang des Laufrades 1.411 trifft und dieses somit in Rotation versetzt. In diesem Zustand entsteht dann in den Wicklungen 1.421 eine elektrische Spannung und ein elektrischer Strom, das heißt es wird elektrische Energie erzeugt. Diese wird zum Aufladen des Pufferkondensators 1.6 genutzt. Das Aufschalten der Druckluft zum Durchströmen durch den Tastkopf 1 ist im Übrigen gleichzeitig auch das auslösende Ereignis, welches den Tastkopf 1 aktiviert.

Im eigentlichen Messbetrieb, der sich unmittelbar nach dem Freiblasen anschließt wird die Druckluftzufuhr abgeschaltet, damit diese die Messung nicht stören kann. Während dieser Zeit wird die im Pufferkondensator 1.6 gespeicherte Energie zu Versorgung der elektronischen Komponenten im Tastkopf 1 verwendet. Wenn dann der Taststift 1.1 ausgelenkt wird, wird letztlich das Abzusetzen eines entsprechenden Signals vom Tastkopf 1 an die Empfängereinheit 2 bewirkt.

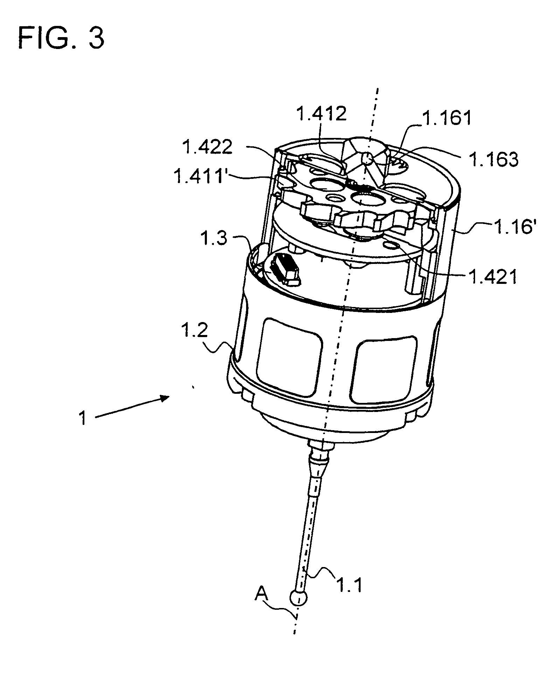

In der Figur 3 ist eine weitere Konstruktionsvariante des erfindungsgemäßen Tastkopfes gezeigt. Der wesentliche Unterscheid zur eingangs beschriebenen Konstruktion besteht darin, dass nun die Turbine 1.41 so konfiguriert ist, dass die Druckluft eine tangentiale Durchströmrichtung aufweist. Zu diesem Zweck weist in diesem Beispiel die Kappe 1.16' Druckluftzuführungen auf - in den Figuren nicht näher dargestellt -, die so ausgerichtet sind, dass die Druckluft tangential zum Laufrad 1.411' strömt. Diese Bohrungen sind an vier Stellen über dem Umfang der Kappe 1.16' bzw. des Laufrads 1.411' verteilt.

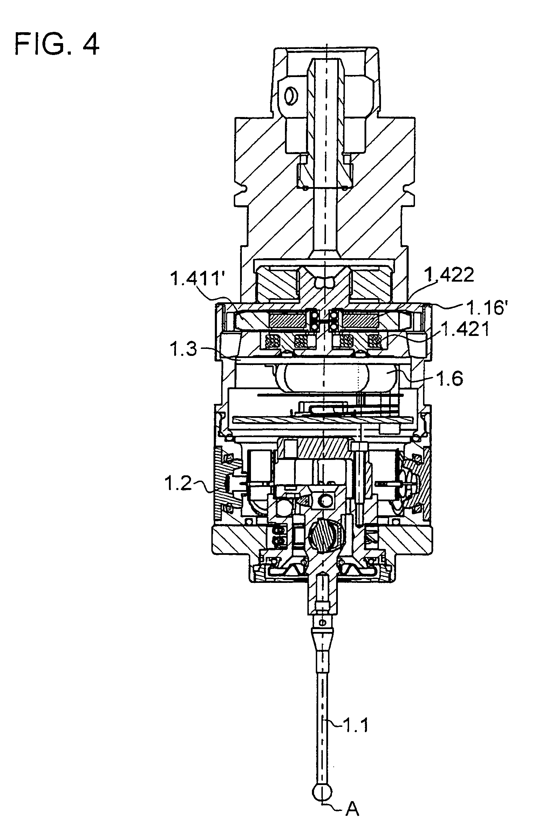

In der Figur 4 ist der Tastkopf 1 im Längsschnitt dargestellt. Wenngleich auch im Tastkopf 1 gemäß Figur 4 Strömungskanäle vorgesehen sind, die derart konfiguriert sind, dass das aus der Turbine 1.41 ausströmende Fluid zur Reinigung einer Messstelle verwendbar ist, sind diese Strömungskanäle in der Figur 4 nicht in der betreffenden Schnittebenen und somit nicht sichtbar.

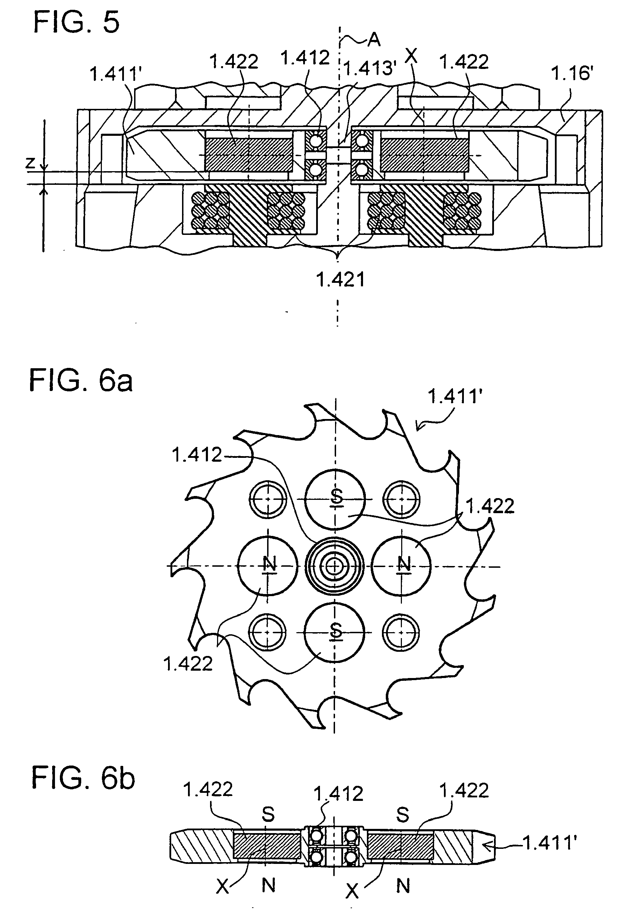

In der Figur 5 ist eine Detailansicht des Längsschnittes gemäß Figur 4 im Bereich des Laufrads 1.411' und der Wicklungen 1.421 gezeigt. Gemäß diesem Ausführungsbeispiel ist der Zapfen 1.413' integraler Bestandteil der Kappe 1.16'. Wie auch in der Konstruktion gemäß der Figur 2 sind auch hier am Laufrad 1.411' Magnete 1.422 befestigt, die den stationären elektrisch leitfähigen Wicklungen 1.421 mit axialem Abstand gegenüberliegen. In der Figur 5 ist der Abstand mit dem Symbol z vermaßt.

In der Figur 6a ist eine Draufsicht auf das Laufrad 1.411' gezeigt. Demnach umfasst das Laufrad 1.411' dreizehn Schaufeln. Wie oben erwähnt, wird dem Laufrad 1.411' an vier über den Umfang verteilten Stellen Druckluft tangential zugeführt. Damit Schwingungszustände vermieden werden, wurde die Anzahl der Schaufeln so gewählt, dass diese nicht durch die Anzahl der Stellen an denen die Druckluft zugeführt wird ganzzahlig teilbar ist. Weiterhin sind im Laufrad 1.411' vier Magnete 1.422 integriert angeordnet. Die Magnete 1.422 sind so im Laufrad 1.411' eingebaut, dass diese nicht aus der Außenkontur, bzw. den Stirnseiten des Laufrads 1.411' hervorstehen. Die Pole der Magnete 1.422 weisen jeweils zur Stirnseite des Laufrads 1.411', wobei über den Umfang benachbarte Magnete 1.422 jeweils eine umgekehrte Polausrichtung aufweisen (siehe auch Fig. 6b). In der Ausführung gemäß Figur 2 liegt im Übrigen ebenfalls eine derartige Anordnung der Magnete 1.422, sowie deren Polorientierung vor.

Somit weist eine Verbindungslinie X der Pole N, S der Magnete 1.422 eine Richtungskomponente parallel zur Achse A des Laufrads 1.411, 1.411' auf. In den gezeigten Ausführungsbeispielen liegen die Verbindungslinien X parallel zur Achse A.

Durch die Bauweise des Tastkopfes 1 dessen Laufrad 1.411, 1.411' Magnete 1.422 aufweist, die stationären elektrisch leitfähigen Wicklungen 1.421 mit axialem Abstand z gegenüberliegen, ist es nunmehr möglich eine überaus kompakte Konstruktion zu erreichen, die wenig Bauraum beansprucht. Dieser Effekt wird auch noch dadurch unterstützt, dass das Laufrad 1.411, 1.411' als Teil der Turbine 1.41 mit den Magneten 1.422 auch Teile des Generators 1.42 umfasst.

Durch diese Konstruktion ist es weiterhin möglich zu einer hermetisch dichten Bauweise zu gelangen. Denn es kann so eine Wellendurchführung für den Generator 1.42 vermieden werden. Somit kann beispielsweise von der Leiterplatte 1.3 mit den darauf befindlichen Elektronikkomponenten und von den eigentlichen Sensorelementen (im unteren Teil des Tastkopfes 1 in Fig. 4) die Druckluft sicher fern gehalten werden. Insbesondere ist dies von gro-βer Wichtigkeit, wenn die Druckluft Schmiermittelrückstände enthält.

In der Figur 7 ist ein stark vereinfachtes Schaltbild der Schaltung S gezeigt, wie sie gemäß einem Ausführungsbeispiel innerhalb des Tastkopfes 1 zum Teil auf der Leiterplatte 1.3 angeordnet ist. Dementsprechend umfasst die Schaltung S den Erzeuger 1.4 von elektrischer Energie, der aus der Turbine 1.41 und dem Generator 1.42 besteht. Im Betrieb des Erzeugers 1.4 von elektrischer Energie wird, unterstützt durch eine entsprechende Gleichrichterelektronik am Generator 1.42, eine pulsierende Gleichspannung U_{1.4} aufgebaut. Damit bei hoher Drehzahl des Laufrades 1.411 keine unzulässig hohe Gleichspannung U_{1.4} entsteht, ist eine Überlastschutzschaltung 1.15 vorgesehen. Während der Zeit, in welcher der Generator 1.42 Strom erzeugt, wird der Pufferkondensator 1.6 aufgeladen. Der negative Pol des Generators 1.42 ist dabei mit Masse verbunden.

Sobald nach Abschalten der Druckluft die Turbine 1.41 und der Generator 1.42 wieder stehen, dient der Pufferkondensator 1.6 zur Energieversorgung von unter anderem einer Sensoreinheit 1.8, einer CPU 1.9 und einer Sendestufe 1.7. Ferner umfasst die Schaltung S eine RC-Siebungsschaltung, bestehend aus einem Widerstand 1.13 und einem Kondensator 1.14 zur Versorgung einer Empfangsstufe 1.18. In Abwandlung der Schaltung S kann auf die Empfangsstufe 1.18 verzichtet werden. Insbesondere kann das Anschalten des Tastkopfes ausschließlich durch Aufschalten der Druckluft erfolgen, statt durch das Absetzen eines Einschaltsignals von der Empfängereinheit 2.

Zwischen dem Erzeuger 1.4 von elektrischer Energie bzw. dem Pufferkondensator 1.6 und der Sendestufe 1.7 ist ein Spannungswandler 1.5 geschaltet.

Gemäß der Figur 7 umfasst die Schaltung S darüber hinaus zwei Spannungsbegrenzer 1.11, 1.12, welche Ausgangsspannungen U_{1.11}, U_{1.12} liefern, die gleichzeitig jeweils als Eingangspannung für die Sensoreinheit 1.8 bzw. für die CPU 1.9 dienen.

Wenn im Messbetrieb der Taststift 1.1 ausgelenkt wird, so wird in der Sensoreinheit 1.8 ein digitales Signal erzeugt (Änderung eines Spannungspegels von High auf Low). Dieses Signal wird an die CPU 1.9 weitergeleitet und dort weiterverarbeitet. Das durch die CPU weiterverarbeitete Signal wird sodann an die Sendestufe 1.7 geleitet, welche das Sendesignal in Form von elektromagnetischen Strahlen bzw. Signalen erzeugt. Im gezeigten Ausführungsbeispiel sind die elektromagnetischen Signale als Infrarot-Signale ausgebildet, es können aber beispielsweise auch Funksignale verwendet werden. Die Signale werden von der stationären Sende-Empfangseinheit 2 empfangen. Im Inneren der Empfängereinheit 2 werden die Infrarot-Signale in elektrische Signale umgewandelt und aufbereitet. Letztlich gelangen die aufbereiteten elektrischen Signale über ein Kabel 2.1 in eine ortsfeste Folgeelektronik, wo sie weiterverarbeitet werden.

Bei abgeschalteter Druckluft kann nach einer gewissen Betriebszeit die Gleichspannung U_{1.4} unter einen Wert fallen, der für den Betrieb des Tastkopfes 1 notwendig ist. Beispielsweise benötigt die Sendestufe 1.7 für einen einwandfreien Betrieb eine Eingangsspannung U_{1.5} von mehr als 5 V, im vorgestellten Ausführungsbeispiel liegt die Betriebssollspannung für die Sendestufe 1.7 bei 5,5 V. Durch den Spannungswandler 1.5 wird nun die Gleichspannung U_{1.4}, die in dieser Phase des Ausführungsbeispiels 4,5 V betragen soll auf U_{1.5} = 5,5 V erhöht. Somit kann das Tastsystem auch mit vergleichsweise geringer Gleichspannung U_{1.4} weiter betrieben werden. Dadurch wird die mögliche Betriebszeit des Tastkopfs 1 erhöht.

Durch den Spannungsbegrenzer 1.12 wird die Spannung U_{1.5} = 5,5 V auf eine Spannung U_{1.12} = 2,8 V reduziert, wie sie für den Betrieb der Sensoreinheit 1.8 erforderlich ist. Neben der Funktion der Spannungsreduzierung weist der Spannungsbegrenzer 1.12 überdies die Eigenschaft auf, die am Eingang der Sensoreinheit 1.8 anliegende Spannung U_{1.12} zu glätten, was für das Messverhalten des Tastkopfs 1 von erheblicher Bedeutung ist.

Die CPU 1.9 wird mit einer Spannung U_{1.11} von 2,8 V versorgt. Deshalb ist ein entsprechender Spannungsbegrenzer 1.11, welcher die Spannung U_{1.5} = 5,5 V auf 2,8 V reduziert, der CPU 1.9 vorgeschaltet.

Durch den Spannungswandler 1.5 ist gewährleistet, dass die Spannung U_{1.5} mindestens 5 V beträgt. Deshalb ist auch sichergestellt, dass die Eingangsspannung U_{1.12} der Sensoreinheit 1.8 durch den Spannungsbegrenzer 1.12 auf die erforderlichen 2,8 V reduzierbar ist.

Eine analoge Betrachtung gilt auch für die Spannungsversorgung der CPU 1.9. Auch hier ist eine Reduktion der Spannung U_{1.5} auf erforderliche Eingangsspannung U_{1.11} von 2,8 V durch den Spannungsbegrenzer 1.11 stets erreichbar. Der Spannungsbegrenzer 1.11 hat auch die Eigenschaft, die Spannung U_{1.11} gegenüber der Spannung U_{1.5} zu glätten, was für den Betrieb der CPU 1.9 von großem Vorteil ist.

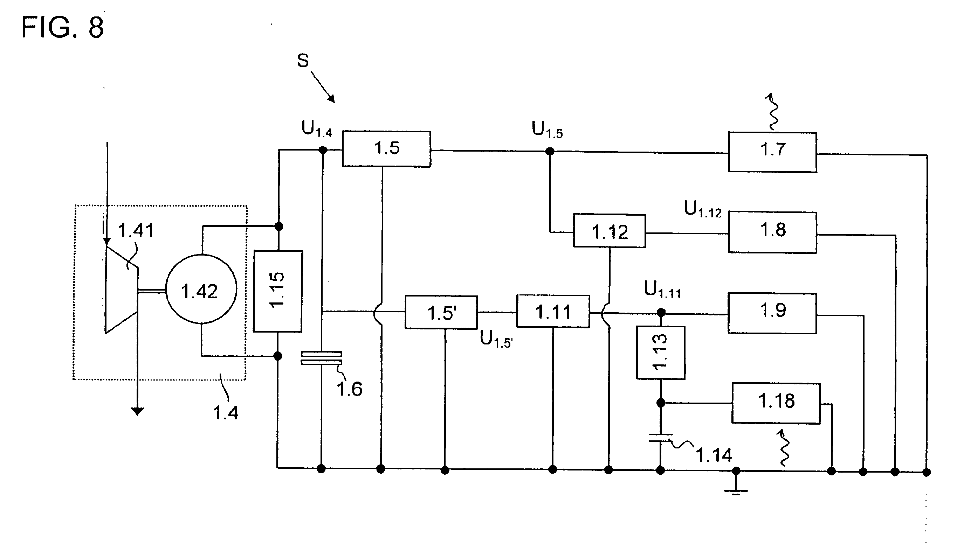

In einem weiteren Ausführungsbeispiel der Schaltung S liegt gemäß der Figur 8 die Gleichspannung U_{1.4} sowohl am Spannungswandler 1.5 als auch an einem weiteren Spannungswandler 1.5' an. Der Spannungswandler 1.5' ist im Prinzip ebenso aufgebaut wie der Spannungswandler 1.5 und erfüllt auch die gleiche Funktion, er ist aber auf eine Ausgangsspannung U_{1.5}' eingestellt, die 3,3 V beträgt. Wenn nun der Pufferkondensator 1.6 zu einem bestimmten Zeitpunkt beispielsweise eine Gleichspannung U_{1.4} von 3 V liefert, wird diese durch den Spannungswandler 1.5' auf 3,3 V erhöht. Wenn im Laufe des Betriebs die Gleichspannung U_{1.4} unter einen Wert von 2,5 V abfällt, so wird diese durch den Spannungswandler 1.5' bei U_{1.5}' = 3,3 V gehalten. In beiden Fällen wird durch den Spannungsbegrenzer 1.11 die Spannung U_{1.5} auf die erforderliche Eingangsspannung U_{1.11} von 2,8 V reduziert. Die Reduzierung führt zu einer Glättung der Eingangsspannung U_{1.11}. Gleichzeitig gewährleistet der andere Spannungswandler 1.5 eine Erhöhung der Spannung auf U_{1.5} = 5,5 V. Durch diese Anordnung kann der Gesamtwirkungsgrad der Schaltung S erhöht werden.

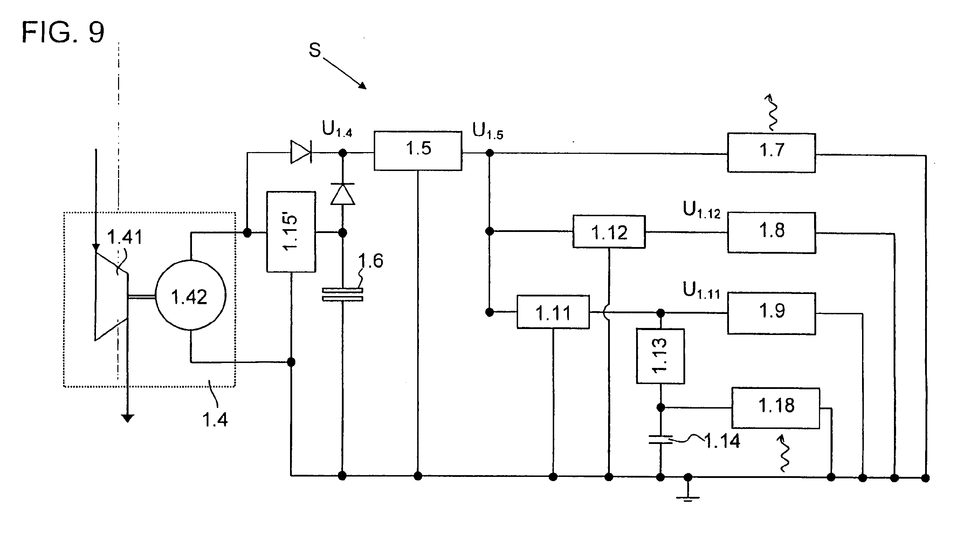

In der Figur 9 ist eine weitere Variante der Schaltung S gezeigt. In diesem Ausführungsbeispiel wird zum Schutz gegen Überlast ein Spannungsregler 1.15' verwendet. Dieser ermöglicht es, dass während der Erzeugung von elektrischer Energie der erzeugte Strom sowohl dem Energiespeicher 1.6 als auch der Sensoreinheit 1.8, der CPU 1.9 und der Sendestufe 1.7 zuführbar ist. Dadurch kann sichergestellt werden, dass die Sensoreinheit 1.8, die CPU 1.9 und die Sendestufe 1.7 unmittelbar nach dem Aufschalten der Druckluft arbeiten können. Eine Verzögerung durch den Ladevorgang des Pufferkondensators 1.6 ist dann ausgeschlossen. Andererseits wird durch den Betrieb der Turbine 1.41 und des Generators 1.42 so viel Strom erzeugt, dass neben der Versorgung der Sensoreinheit 1.8, der CPU 1.9 und der Sendestufe 1.7 auch der Pufferkondensator 1.6 durch den Spannungsregler 1.15' kontrolliert aufgeladen werden kann.

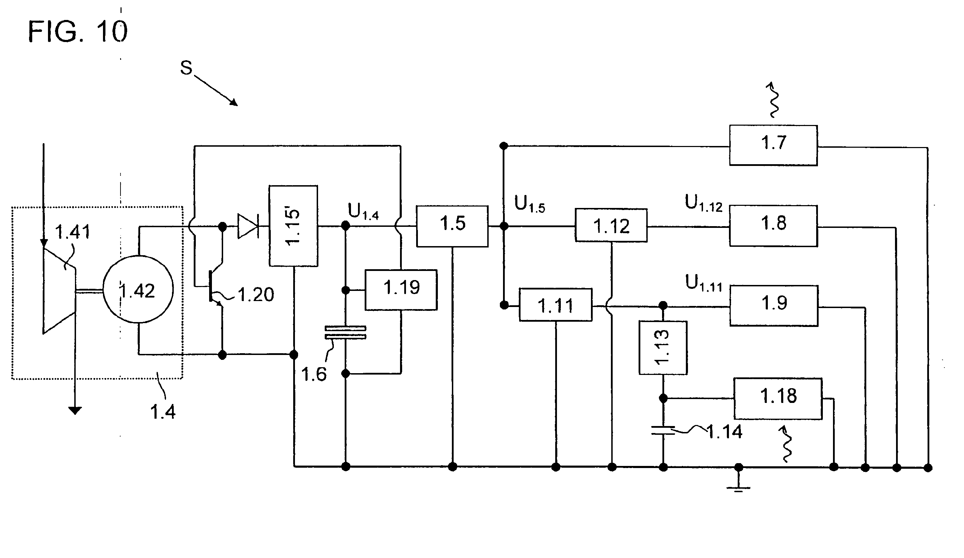

In der Figur 10 ist eine weitere Variante der Schaltung S gezeigt. Parallel zum Pufferkondensator 1.6 ist hier ein Steuerelement 1.19 geschaltet. Sobald die Spannung U_{1.4} einen gewissen Grenzwert überschreitet, zum Beispiel, wenn der Pufferkondensator vollständig aufgeladen ist, wird durch das Steuerelement 1.19 ein Kurschlusstransistor 1.20 in einen stromdurchlässigen Zustand versetzt, so dass die Wicklungen 1.421 des Generators 1.42 kurzgeschlossen werden. Auf diese Weise wird für den Generator 1.42 die Last erhöht. Dies hat zur Folge, dass die Drehzahl des Laufrads 1.411, 1.411' reduziert wird. Somit kann die maximale Drehzahl des Laufrads 1.411, 1.411' begrenzt werden, bzw. es können allzu hohe Drehzahlen des Laufrads 1.411, 1.411' vermieden werden. Dies hat unter anderem den Vorteil, dass die Lebenszeit der Lager 1.412 vergrößert wird. Hinzu kommt eine reduzierte Schallemission beim Betrieb der Turbine 1.41. Im Übrigen wird, wie auch im Ausführungsbeispiel gemäß Figur 9 gezeigt, als Überlastschutz ein Spannungsregler 1.15' verwendet.

Alternativ zu dem oben beschriebenen Spannungswandler 1.5 kann auch zum gleichen Zweck ein so genanntes SEPIC-Element verwendet werden. Das SEPIC-Element hat die Eigenschaft, dass die vorgegebene Ausgangsspannung auch nach oben hin nicht verändert wird, das heißt, wenn bei einem SEPIC-Element eine Ausgangsspannung von 5,5 V vorgegeben ist, wird diese Spannung nicht unterschritten, wenn die entsprechende Eingangsspannung kleiner als 5,5 V ist, sie wird aber auch nicht überschritten, wenn die entsprechende Eingangsspannung größer als 5,5 V ist. Dieses Verhalten ist vorteilhaft, weil daraus eine Reduzierung der Verlustleistung, bzw. zur Erhöhung des Wirkungsgrades der Schaltung S resultiert.

## Patentansprüche

1. Tastkopf (1) mit einem Taststift (1.1), wobei der Tastkopf (1)
· eine Sensoreinheit (1.8),
· eine CPU (1.9), und
· eine Sendestufe (1.7), sowie
· einen Erzeuger (1.4) von elektrischer Energie zur Energieversorgung der Sensoreinheit (1.8), der CPU (1.9), und der Sendestufe (1.7) umfasst,
wobei bei einer Auslenkung des Taststifts (1.1) von der Sensoreinheit (1.8) ein elektrisches Signal auslösbar ist, welches in der Sendestufe (1.7) in ein elektromagnetisches Signal umwandelbar ist, und
der Erzeuger (1.4) von elektrischer Energie eine Turbine (1.41) mit einem um eine Achse (A) drehbaren Laufrad (1.411, 1.411') umfasst und mit Hilfe eines mit Druck beaufschlagten Fluids betreibbar ist, wobei am Laufrad (1.411, 1.411') der Turbine (1.41) Magnete (1.422) befestigt
sind, die stationären elektrisch leitfähigen Windungen (1.421) mit axialem Abstand (z) gegenüberliegen.

2. Tastkopf (1) gemäß dem Anspruch 1, wobei die Magnete (1.422) in das Laufrad (1.411, 1.411') integriert sind.

3. Tastkopf (1) gemäß dem Anspruch 1 oder 2, wobei die Magnete (1.422) als Permanentmagnete ausgebildet sind.

4. Tastkopf (1) gemäß einem der vorhergehenden Ansprüche, wobei die Verbindungslinie (X) der Pole (N, S) eines der Magnete (1.422) eine Richtungskomponente parallel zur Achse (A) des Laufrads (1.411, 1.411') aufweist.

5. Tastkopf (1) gemäß einem der vorhergehenden Ansprüche, wobei die Turbine (1.41) so konfiguriert ist, dass das Fluid eine tangentiale Durchströmrichtung aufweist.

6. Tastkopf (1) gemäß einem der vorhergehenden Ansprüche, wobei aus dem Erzeuger (1.4) von elektrischer Energie das Fluid, insbesondere Druckluft, ausströmt und entsprechende Strömungskanäle im Tastkopf (1) derart konfiguriert sind, dass das ausströmende Fluid zur Reinigung einer Messstelle verwendbar ist.

7. Tastkopf (1) gemäß einem der vorhergehenden Ansprüche, wobei dieser weiterhin einen Energiespeicher (1.6) zur Speicherung der erzeugten elektrischen Energie aufweist.

8. Tastkopf (1) gemäß dem Anspruch 7, wobei der Energiespeicher (1.6) ein Kondensator ist.

9. Tastkopf (1) gemäß dem Anspruch 7 oder 8, wobei der Tastkopf ferner einen Spannungswandler (1.5) umfasst und die am Spannungswandler (1.5) anliegende Eingangsspannung (U_{1.4})
der Ausgangsspannung (U_{1.4}) des Erzeugers (1.4) von elektrischer Energie oder
der Ausgangsspannung (U_{1.4}) des Energiespeichers (1.6) entspricht.

10. Tastkopf (1) gemäß einem der vorhergehenden Ansprüche, wobei der Tastkopf (1) ferner einen Spannungswandler (1.5) umfasst, an dessen Ausgang eine Ausgangsspannung (U_{1.5}) erzeugbar ist, die größer ist als die am Spannungswandler (1.5) anliegende Eingangsspannung (U_{1.4}), wobei die Ausgangsspannung (U_{1.5}) zur Energieversorgung der Sendestufe (1.7) dient.

11. Tastkopf (1) gemäß einem der vorhergehenden Ansprüche, wobei dieser derart konfiguriert ist, dass während des Betriebs des Erzeugers (1.4) von elektrischer Energie der erzeugte Strom sowohl dem Energiespeicher (1.6) als auch der Sensoreinheit (1.8), oder der CPU (1.9), oder der Sendestufe (1.7) zuführbar ist.

12. Tastkopf (1) gemäß einem der vorhergehenden Ansprüche, wobei dieser eine Steuerelektronik (1.19) aufweist, durch die zur Begrenzung der Drehzahl des Laufrads (1.411, 1.411') die stationären elektrisch leitfähigen Windungen (1.421) kurzschließbar sind.

13. Tastkopf (1) gemäß einem der vorhergehenden Ansprüche, wobei dieser derart konfiguriert ist, dass eine Aktivierung der Tastkopfs (1) durch Aufschalten des mit Druck beaufschlagten Fluids, auf den Tastkopf erreichbar ist.

## Claims

1. A probe head (1) comprising a stylus (1.1), wherein the probe head (1) comprises
- a sensor unit (1.8),
- a CPU (1.9) and
- a transmission stage (1.7) as well as
- a generator (1.4) of electrical energy for the energy supply of the sensor unit (1.8), the CPU (1.9) and the transmission stage (1.7),
wherein, in response to a deflection of the stylus (1.1), the sensor unit can trigger an electrical signal, which can be converted into an electromagnetic signal in the transmission stage (1.7) and
the generator (1.4) of electrical energy comprises a turbine (1.41) comprising a rotor disk (1.411, 1.411'), which can be rotated about an axis (A) and which can be actuated by means of a pressurized fluid, wherein
magnets (1.422), which are located opposite to stationary electrically conductive windings (1.421) at an axial distance (z), are fastened to the rotor disk (1.411, 1.411') of the turbine (1.41).

2. The probe head (1) according to claim 1, wherein the magnets (1.422) are integrated into the rotor disk (1.411, 1.411').

3. The probe head (1) according to claim 1 or 2, wherein the magnets (1.422) are embodied as permanent magnets.

4. The probe head (1) according to one of the preceding claims, wherein the connecting line (X) of the poles (N, S) of one of the magnets (1.422) encompasses a directional component parallel to the axis (A) of the rotor blade (1.411, 1.411').

5. The probe head (1) according to one of the preceding claims, wherein the turbine (1.41) is configured such that the fluid encompasses a tangential direction of flow.

6. The probe head (1) according to one of the preceding claims, wherein the fluid, in particular compressed air, flows out of the generator (1.4) of electrical energy and corresponding flow ducts in the probe head (1) are configured such that the escaping fluid can be used to clean a measuring point.

7. The probe head (1) according to one of the preceding claims, wherein said probe head (1) furthermore comprises an energy storage (1.6) for storing the generated electrical energy.

8. The probe head (1) according to claim 7, wherein the energy storage (1.6) is a capacitor.

9. The probe head (1) according to claim 7 or 8, wherein the probe head (1) further comprises a voltage converter (1.5) and the input voltage (U_{1.4}) applied to the voltage converter (1.5) corresponds
- to the output voltage (U_{1.4}) of the generator (1.4) of electrical energy or
- to the output voltage (U_{1.4}) of the energy storage (1.6).

10. The probe head (1) according to one of the preceding claims, wherein the probe head (1) further comprises a voltage converter (1.5), at the output of which an output voltage (U_{1.5}) can be generated, which is greater than the input voltage (U_{1.4}) applied to the voltage converter (1.5), wherein the output voltage (U_{1.5}) serves for the energy supply of the transmission stage (1.7).

11. The probe head (1) according to one of the preceding claims, wherein said probe head (1) is configured such that the generated current can be supplied to the energy storage (1.6) as well as to the sensor unit (1.8) or to the CPU (1.9) or to the transmission stage (1.7) during the operation of the generator (1.4) of electrical energy.

12. The probe head (1) according to one of the preceding claims, wherein said probe head (1) encompasses a control electronics (1.19), by means of which the stationary electrically conductive windings (1.421) can be short-circuited for limiting the speed of the rotor blade (1.411, 1.411').

13. The probe head (1) according to one of the preceding claims, wherein said probe head (1) is configured such that an activation of the probe head (1) can be attained by applying the pressurized fluid to the test head.

## Revendications

1. Tête de palpeur (1) avec un palpeur (1.1), la tête de palpeur comprenant :
- une unité de détection (1.8),
- une unité centrale de traitement (1.9), et
- un générateur (1.4) d'énergie électrique pour l'alimentation en énergie de l'unité de détection (1.8), de l'unité centrale de traitement (1.9) et de la phase de transmission (1.7),
dans laquelle, lors de la déviation du palpeur (1.1) de l'unité de détection (1.8), un signal électrique peut être déclenché, lequel peut être transformé en un signal électromagnétique dans la phase de transmission (1.7), et
le générateur (1.4) d'énergie électrique comprend une turbine (1.41) avec un rotor (1.411, 1.411') rotatif autour d'un axe (A) et peut fonctionner à l'aide d'un fluide sous pression, où
les aimants (1.422), situés en face de spires électriquement conductrices (1.421) stationnaires, avec un écart axial (z), sont fixés au rotor (1.411, 1.411') de la turbine (1.41).

2. Tête de palpeur (1) selon la revendication 1, dans laquelle les aimants (1.422) sont intégrés dans le rotor (1.411, 1.411').

3. Tête de palpeur (1) selon la revendication 2 ou 3, dans laquelle les aimants (1.422) sont conçus comme des aimants permanents.

4. Tête de palpeur (1) selon l'une des revendications précédentes, dans laquelle la droite de liaison (X) des pôles (N, S) de l'un des aimants (1.422) comporte une composante directionnelle parallèle à l'axe (A) du rotor (1.411, 1.411').

5. Tête de palpeur (1) selon l'une des revendications précédentes, dans laquelle la turbine (1.41) est configurée de telle manière que le fluide présente une direction d'écoulement tangentielle.

6. Tête de palpeur (1) selon l'une des revendications précédentes, dans laquelle le fluide, en particulier de l'air comprimé, sort du générateur (1.4) d'énergie électrique, et des canaux d'écoulement correspondants dans la tête de palpeur (1) sont configurés de telle manière, que le fluide en écoulement peut être utilisé pour le nettoyage d'un point de mesurage.

7. Tête de palpeur (1) selon l'une des revendications précédentes, dans laquelle celle-ci comporte en outre un réservoir d'énergie (1.6) pour le stockage de l'énergie électrique produite.

8. Tête de palpeur (1) selon la revendication 7, dans laquelle le réservoir d'énergie (1.6) est un condensateur.

9. Tête de palpeur (1) selon la revendication 7 ou 8, dans laquelle la tête de palpeur comprend en outre un transformateur de tension (1.5) et la tension d'entrée (U_{1.4}) appliquée au transformateur de tension (1.5) correspond à
- la tension de sortie (U_{1.4}) du générateur (1.4) d'énergie électrique, ou à
- la tension de sortie (U_{1,4}) du réservoir d'énergie (1.6).

10. Tête de palpeur (1) selon l'une des revendications précédentes, dans laquelle la tête de palpeur (1) comprend en outre un transformateur de tension (1.5), à la sortie duquel peut être produite une tension de sortie (U_{1.5}), qui est supérieure à la tension d'entrée (U_{1.4}) appliquée au transformateur de tension (1.5) et sert à l'alimentation en énergie de la phase de transmission (1.7).

11. Tête de palpeur (1) selon l'une des revendications précédentes, dans laquelle celle-ci est configurée de telle manière, que pendant le fonctionnement du générateur (1.4) d'énergie électrique, le courant produit peut être alimenté aussi bien vers le réservoir d'énergie (1.6) que vers l'unité de détection (1.8), ou encore vers l'unité centrale de traitement (1.9) ou la phase de transmission (1.7).

12. Tête de palpeur (1) selon l'une des revendications précédentes, dans laquelle celle-ci comporte une électronique de commande (1.19), par laquelle les spires électriquement conductrices (1.421) stationnaires peuvent être court-circuitées, pour limiter le nombre de tours du rotor (1.411, 1.411').

13. Tête de palpeur (1) selon l'une des revendications précédentes, dans laquelle celle-ci est configurée de telle manière qu'une activation de la tête de palpeur (1) peut être atteinte par l'application du fluide sous pression à la tête de palpeur.
